# NEUE EUROPÄISCHE PATENTSCHRIFT

(11) **EP 1 405 555 B2**
(45) Veröffentlichungstag und Bekanntmachung des Hinweises auf die Entscheidung über den Einspruch: **07.03.2012**
(45) Hinweis auf die Patenterteilung: 04.06.2008
(21) Anmeldenummer: 03019127.4
(22) Anmeldetag: 23.08.2003
(51) Int. Cl.: A01D 43/08

(54) **Verfahren zur Steuerung einer Überladeeinrichtung**
Method of controlling a discharge device
Procédé de commande d'un appareil de décharge

(30) Priorität: 10.09.2002 DE 10242164
(43) Veröffentlichungstag der Anmeldung: 07.04.2004
(73) Patentinhaber: CLAAS Selbstfahrende Erntemaschinen GmbH, 33428 Harsewinkel (DE)
(72) Erfinder: Isfort, Heinrich, 48249 Dülmen (DE); Pollklas, Manfred, 33378 Rheda-Wiedenbrück (DE)

(56) Entgegenhaltungen:
- EP-A- 1 151 652
- EP-A1- 1 052 388
- DE-A- 4 403 893
- DE-A- 10 119 279
- DE-A- 19 934 882
- DE-U- 20 018 200
- JP-A1- 07 298 774

## Beschreibung

Die Erfindung betrifft ein Verfahren zur Steuerung einer um eine vertikale und eine horizontale Achse schwenkbar an einem Feldhäcksler angeordneten Überladeeinrichtung, bei dem die Überladeeinrichtung automatisch aus einer aktuellen Position um die vertikale Achse in eine Position oberhalb einer an dem Feldhäcksler angeordneten Ablageeinrichtung für die Überladeeinrichtung geschwenkt wird. Darüber hinaus betrifft die Erfindung eine geeignete Vorrichtung zur entsprechenden Steuerung der Überladeeinrichtung sowie einen Feldhäcksler mit einer derartigen Vorrichtung.

Selbstfahrende Erntemaschinen wie Feldhäcksler, weisen üblicherweise eine Überladeeinrichtung, z. B. einen Auswurfkrümmer, auf. Mittels dieser Überladeeinrichtung wird das Erntegut von der Erntemaschine auf ein nebenstehendes oder nebenherfahrendes Transportfahrzeug übergeladen. Hierzu kann die Überladeeinrichtung durch eine Verschwenkung um die vertikale Achse und die horizontale Achse so in einer Arbeitsstellung positioniert werden, dass der ausgeworfene bzw. auslaufende Gutstrom an der gewünschten Stelle auf das Transportfahrzeug trifft. Dabei ragt die Überladeeinrichtung in der Regel seitlich aus der Kontur der Erntemaschine heraus. Innerhalb des eigentlichen Einsatzbereichs der Erntemaschine auf einem freien Feld ist dies kein Problem. Bei einer Fahrt auf öffentlichen Straßen auf dem Weg vom und zum Einsatzort ist ein solches seitliches Herausragen der Überladeeinrichtung wegen der Überbreite aus Sicherheitsgründen nicht akzeptabel. Für eine Straßenfahrt muss daher die Überladeeinrichtung in eine Straßenfahrtposition gebracht werden, in der die Überladeeinrichtung in der Regel nach hinten geschwenkt wird. Um die zulässigen Höhen einzuhalten, muss die Überladeeinrichtung außerdem nach unten verschwenkt werden. Übliche Erntemaschinen weisen daher im hinteren Bereich eine Ablageeinrichtung, beispielsweise einen Ablagebügel, auf, auf dem die Überladeeinrichtung in der Straßenfahrtposition abgelegt wird.

Das Anfahren der Straßenfahrtposition auf der Ablageeinrichtung erfolgt in der Regel manuell durch den Fahrer, wobei dieser die Überladeeinrichtung um die vertikale Achse verschwenkt und dann absenkt, sobald sich die Überladeeinrichtung oberhalb der Ablageeinrichtung befindet. Hierbei muss der Fahrer die Überladeeinrichtung permanent beobachten und dafür sorgen, dass die Überladeeinrichtung sanft an der richtigen Position abgelegt wird, ohne dass z. B. die Ablageeinrichtung oder die Überladeeinrichtung beschädigt werden. Ungünstigerweise befindet sich jedoch der vom Fahrer während dieses Vorgangs zu beobachtende Bereich hinter der Fahrerkabine, so dass eine gleichzeitige Beobachtung und Steuerung der Überladeeinrichtung äußerst unbequem ist. Darüber hinaus ist es schwierig, die Überladeeinrichtung exakt oberhalb der Ablageeinrichtung zu positionieren, so dass während des Absenkens keine Positionskorrektur bezüglich der Schwenkstellung um die vertikale Achse mehr erforderlich ist.

In der DE 44 03 893 A1 wird bereits eine Steuervorrichtung für einen Auswurfkrümmer beschrieben, bei der der Fahrer mittels eines einfachen Drehschalters die Überladeeinrichtung in drei verschiedene Stellungen - eine Arbeitsposition auf der linken Seite, eine Arbeitsposition auf der rechten Seite und eine dritte Position oberhalb der Ablageeinrichtung - schwenken kann. Dieser Drehschalter betätigt jedoch nur die Steuerventile für die horizontale Verschwenkung der Überladeeinrichtung. Der Fahrer muss daher die Überladeeinrichtung nach wie vor vorsichtig manuell auf die Ablageeinrichtung absenken und dabei die Überladeeinrichtung beobachten.

Es ist Aufgabe der vorliegenden Erfindung, eine Alternative zu diesem Stand der Technik zu schaffen, welche das Verfahren der Überladeeinrichtung in die Straßenposition für den Fahrer erleichtert und sicherer macht.

Diese Aufgabe wird durch ein Verfahren gemäß Patentanspruch 1 und durch eine Vorrichtung gemäß Patentanspruch 10 gelöst. Erfindungsgemäß wird hierbei die Überladeeinrichtung innerhalb eines ereignisgesteuerten Straßenfahrtpositioniervorgangs vollkommen automatisch in die Straßenfahrtposition auf die Ablageeinrichtung abgesenkt.

Dabei wird der Start des Straßenfahrtpositioniervorgangs automatisch an bestimmte Betriebszustände oder Maschinenparameter bzw. Kombinationen von verschiedenen Betriebszuständen und/oder Maschinenparametern gekoppelt. Dies hat den Vorteil, dass der Fahrer beim Verlassen des Felds nach einem Emteeinsatz vor einem Befahren einer öffentlichen Straße nicht vergessen kann, die Überladeeinrichtung in die Straßenfahrtposition zu verschwenken. Die Gefahr, dass durch eine nicht eingeschwenkte Überladeeinrichtung Schäden an der Erntemaschine oder an Objekten verursacht werden, die mit der Maschine kollidieren, wird dadurch erheblich reduziert.

Zur sicheren automatischen Steuerung der Überladeeinrichtung auf die Ablageeinrichtung sollte eine erfindungsgemäße Vorrichtung vorzugsweise Steuermittel mit geeigneten Positionsfeststellungsmitteln aufweisen, mit denen die jeweiligen aktuellen Positionsdaten der Überladeeinrichtung ermittelt werden können. Hierbei kann es sich z. B. um Positionssensoren handeln, welche jeweils die Winkelstellung um die vertikale oder um die horizontale Achse messen. Es kann sich aber auch um eine rein softwaremäßige Einheit handeln, die die Steuerbefehle bzw. Signale, welche die Verschwenkung der Überladeeinrichtung vorgeben, mitprotokolliert und anhand dieser mitprotokollierten Daten jeweils immer über die genaue Position informiert ist. Darüber hinaus müssen die Steuermittel der Vorrichtung so ausgestaltet sein, dass innerhalb des automatischen Straßenfahrtpositioniervorgangs in Abhängigkeit von der aktuellen Position der Überladeeinrichtung und von der vorgegebenen Ablageposition, d. h. anhand von gespeicherten Positionsdaten der Ablageeinrichtung, passende Steuersignale an eine Schwenkwinkelstelleinrichtung zum Verschwenken der Überladeeinrichtung um die vertikale Achse sowie passende Steuersignale an eine Höhenpositionsstelleinrichtung zum vertikalen Verschwenken der Überladeeinrichtung um die horizontale Achse ausgegeben werden.

Die Vorrichtung weist vorzugsweise Steuermittel mit einer Auswerteeinheit auf, die eingehende Steuerbefehle zur Steuerung der Erntemaschine und/oder Statussignale, welche bestimmte Betriebszustände bzw. Maschinenparameter der Erntemaschine repräsentieren, auswertet und bei bestimmten Steuerbefehlen und/oder Statussignalen oder Kombinationen von Steuerbefehlen und/oder Statussignalen den Straßenfahrtpositioniervorgang auslöst. Da zum Einschalten eines Betriebszustands ohnehin beispielsweise von einer Benutzerschnittstelle aus zunächst entsprechende Steuerbefehle an die betreffenden Vorrichtungen der Erntemaschine gesendet werden müssen, bietet es sich an, dass diese Steuerbefehle als auslösendes Ereignis von der Auswerteeinheit erkannt werden. Sofern eine Nutzung solcher Steuerbefehle nicht möglich ist, weil es sich bei den Maschinenparametern beispielsweise um gefahrene Distanzen, Geschwindigkeiten etc. handelt, werden vorzugsweise entsprechende Statussignale der Maschine, beispielsweise Signale eines Fahrstrecken- bzw. Geschwindigkeitsmessgeräts, registriert und zur Auswertung herangezogen.

Die automatische Straßenpositionierung kann beispielsweise an folgende Betriebszustände bzw. Betriebszustandskombinationen gekoppelt werden:
Eine Möglichkeit ist ein automatisches Auslösen des Straßenfahrtpositioniervorgangs beim Einschalten eines sogenannten Vorwärts-Freigabeschalters.

Mit diesem Vorwärts-Freigabeschalter, auch "TÜV-Schalter" genannt, wird die gesamte Arbeitshydraulik abgeschaltet und verriegelt. Er ist vorschriftsmäßig während einer Straßenfahrt einzuschalten, um zu verhindern, dass der Erntevorsatz oder sonstige Einrichtungen unbeabsichtigt bewegt oder in Betrieb gesetzt werden.

Eine weitere Möglichkeit ist die automatische Einstellung des Straßenfahrtpositioniervorgangs, wenn der Hauptantrieb für eine Arbeitsvorrichtung der Erntemaschine, beispielsweise der Antrieb der Häckseltrommel, abgeschaltet wird.

Alternativ oder zusätzlich kann die Auslösung des Straßenfahrtpositioniervorgangs auch daran gekoppelt sein, dass ein Straßengang der Erntemaschine eingeschaltet ist, d. h. dass das Getriebe der Erntemaschine in den schnelleren, zweiten Gang geschaltet ist. Damit die Überladeeinrichtung nicht unerwünscht in die Straßenfahrtposition gebracht wird, wenn der Fahrer ausnahmsweise eine Erntefahrt in einem schnelleren Gang durchführen möchte, wird das Einschalten des Straßengangs vorzugsweise nur in Kombination mit einem weiteren Ereignis zur Einleitung des Straßenfahrtpositioniervorgangs genutzt, beispielsweise in Kombination mit einer Betätigung des Vorwärts-Freigabeschalters.

Um zu verhindern, dass sich während der automatischen Verschwenkung in die Straßenfahrtposition noch eine Person auf der Erntemaschine im Schwenkbereich der Überladeeinrichtung befindet und von der Überladeeinrichtung getroffen werden kann, kann vorzugsweise der Straßenfahrtpositioniervorgang sicherheitshalber erst dann ausgelöst werden, wenn die Erntemaschine bereits fährt. Hierbei kann die Auslösung auch zeitverzögert erfolgen, beispielsweise erst dann, wenn die Erntemaschine eine bestimmte Zeitspanne gefahren ist und/oder eine bestimmte Wegstrecke zurückgelegt hat.

Besonders sinnvolle Ereigniskombinationen, bei denen davon auszugehen ist, dass der Erntevorgang beendet und die Maschine auf eine Straßenfahrt vorzubereiten ist, sind beispielsweise die beiden folgenden Ereigniskombinationen:
- Abschalten des Hauptantriebs und Anfahren der Maschine, gegebenenfalls kombiniert mit einer Mindestwegstrecke oder Mindestfahrzeit;
- Einschalten des Straßengangs und des Vorwärts-Freigabeschalters.

Das Verfahren der Überladeeinrichtung von der Arbeitsposition in die Straßenfahrtposition kann zweistufig erfolgen, wobei z. B. in einem ersten Schritt die Überladeeinrichtung zunächst über die Ablageeinrichtung geschwenkt und dann in einem nächsten Schritt abgesenkt wird. Alternativ kann die Überladeeinrichtung auch gleichzeitig koordiniert abgesenkt und um die vertikale Achse verschwenkt und so auf dem schnellsten Weg aus der Arbeitsposition auf die Ablageeinrichtung verfahren werden.

Bei beiden Varianten wird bevorzugt die Schwenkgeschwindigkeit um die vertikale Achse und/oder die Absenkgeschwindigkeit in Abhängigkeit von einem Abstand der aktuellen Position der Überladeeinrichtung zu einer Zielposition der jeweiligen Bewegung gesteuert.

Bei einem bevorzugten Ausführungsbeispiel ist an der Ablageeinrichtung ein Endschalter angeordnet, welcher beim Ablegen der Überladeeinrichtung in die Straßenfahrtposition betätigt wird. Dadurch wird der Straßenfahrtpositioniervorgang beendet. Das Signal des Endschalters kann dabei vorzugsweise auch zum Eichen der Positionsfeststellungsmittel benutzt werden.

Sofern sich an der Überladeeinrichtung abgabeseitig eine Auswurfklappe befindet, so wird dieser vorzugsweise während des Straßenfahrtpositioniervorgangs ebenfalls automatisch in eine Ruheposition verfahren, beispielsweise in eine wagerechte, gestreckte Position.

Die Überladeeinrichtung kann im Übrigen auch aus mehreren, jeweils über horizontale Achsen untereinander verbundenen Segmenten aufgebaut sein.

In diesem Fall kann innerhalb des Straßenfahrtpositioniervorgangs eine separate Verschwenkung einzelner Segmente um die jeweilige horizontale Achse erfolgen, um die Überladeeinrichtung passend auf der Ablageeinrichtung abzulegen.

Die Erfindung wird im Folgenden unter Hinweis auf die beigefügten Figuren anhand eines Ausführungsbeispiels näher erläutert. Hieraus ergeben sich weitere Einzelheiten und Vorteile der Erfindung. Es zeigen:
Figur 1 eine schematische Seitenansicht eines Feldhäckslers mit einem nach hinten geschwenkten Auswurfkrümmer in zwei unterschiedlichen Positionen,
Figur 2 eine schematische Draufsicht auf den Feldhäcksler gemäß Figur 1 mit einer Darstellung des Auswurfkrümmers in einer rechtsseitigen und einer linksseitigen Arbeitsstellung sowie in der Straßenfahrtposition,
Figur 3 ein schematisches Schaltbild einer elektronischen Realisierung einer erfindungsgemäßen Steuervorrichtung für den Auswurfkrümmer des Feldhäckslers gemäß den Figuren 1 und 2.

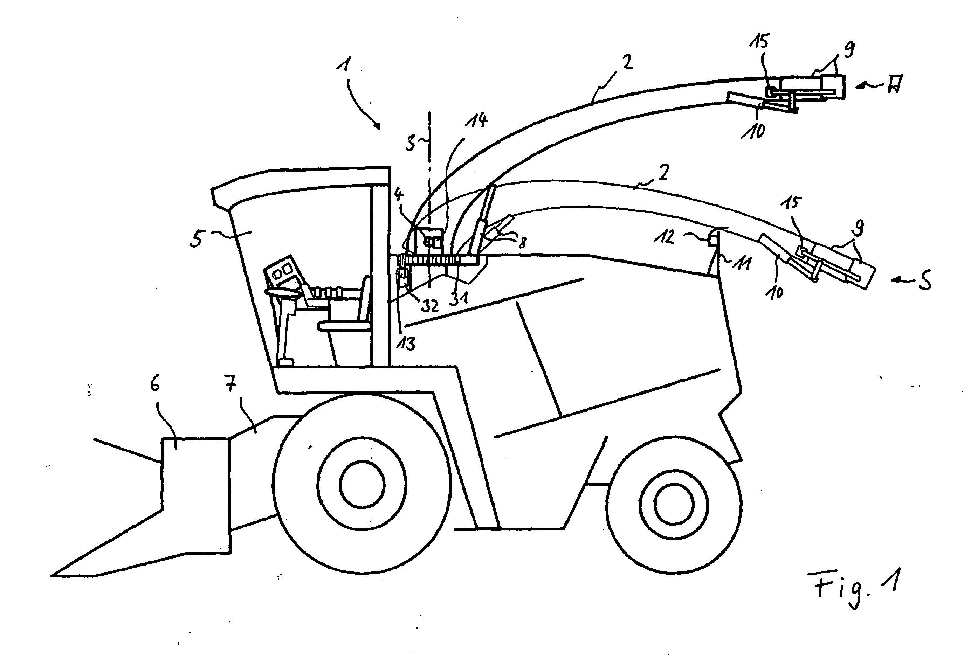

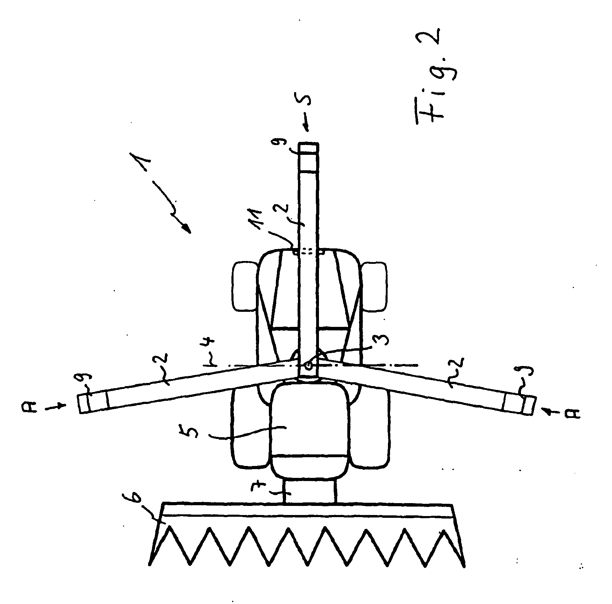

Bei der in den Figuren 1 und 2 dargestellten Erntemaschine 1 handelt es sich um einen üblichen Feldhäcksler 1. Während einer Erntefahrt werden mittels eines Erntevorsatzes 6, hier beispielsweise mittels eines Maisgebisses, die abzuerntenden Pflanzen abgeschnitten und über einen Einzug 7 in das Innere des Feldhäckslers 1 geleitet. In einer Häckseltrommel (nicht dargestellt) werden die Pflanzen gehäckselt und das gehäckselte Erntegut wird anschließend über die Überladeeinrichtung 2, hier einen Auswurfkrümmer 2, in ein Transportfahrzeug (nicht dargestellt) übergeladen, das während des Ernteeinsatzes beispielsweise parallel neben dem Feldhäcksler 1 herfährt. Der Auswurfkrümmer 2 ist um eine vertikale Achse 3 und zur Veränderung der Höheneinstellung um eine horizontale Achse 4 verschwenkbar in üblicher Weise direkt hinter der Fahrerkabine 5 am Feldhäcksler 1 angeordnet.

Am auswurfseitigen Ende des Auswurfkrümmers 2 befindet sich eine Auswurfklappe 9, welche über einen Hydraulikzylinder 10 verstellbar ist. Durch die Stellung der Auswurfklappe 9 kann die Wurfweite, d. h. der Abstand zwischen dem am Feldhäcksler 1 befindlichen, eingangsseitigen Ende des Auswurfkrümmers 2 und dem Auftreffpunkt des Gutstroms auf dem Transportfahrzeug, gesteuert werden. Wird die Auswurfklappe 9 nach unten geschwenkt, so ist die Wurfweite bei gleichbleibender Höheneinstellung des Auswurfkrümmers 2 geringer als bei einer nach oben geschwenkten Auswurfklappe 9.

In Figur 2 ist der Auswurfkrümmer 2 in der Straßenfahrtsposition und in den bevorzugt angefahrenen Arbeitspositionen A dargestellt, in denen der Auswurfkrümmer jeweils rechts und links nach außen schräg nach vorn geschwenkt ist. Neben den in Figur 2 dargestellten Arbeitsstellungen A kann sich der Auswurfkrümmer 2 bei einer Überladung des Ernteguts auf das Transportfahrzeug aber auch in jeder anderen Position befinden, sofern das Transportfahrzeug sich an dem passenden Ort befindet. Insbesondere kann sich der Auswurfkrümmer 2, sofern das Transportfahrzeug bei einem Ernteeinsatz hinter dem Feldhäcksler 1 herfährt, auch während der Erntefahrt bereits in einer nach hinten gestreckte Stellung oberhalb der Ablageeinrichtung 11 befinden (Stellung A in Figur 1).

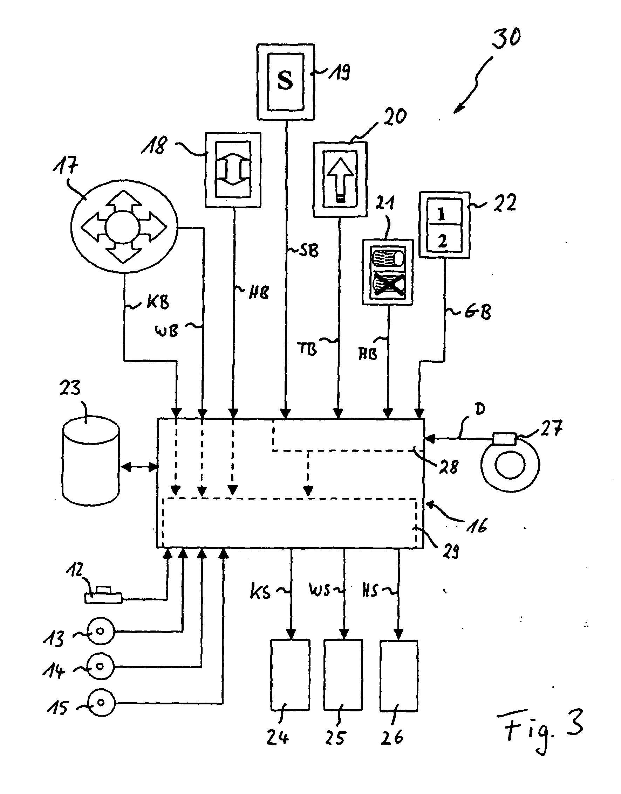

Figur 3 zeigt ein Ausführungsbeispiel für eine elektronische Steuerung 30 der erfindungsgemäßen Vorrichtung. Einen zentralen Teil dieser Steuerung 30 bildet eine Rechnereinheit 16, beispielsweise ein Mikrocontroller, welcher über eine Benutzerschnittstelle mit verschiedenen Tasten und Schaltern 17, 18, 19, 20, 21, 22 vom Benutzer eingegebene Steuerbefehle KB, WB, HB, SB, TB, AB, GB empfängt.

Eine dieser Tasten ist eine Wipptaste 18 zur Höhenverschwenkung des Auswurfkrümmers 2 um die horizontale Achse 4. In Abhängigkeit davon, ob der Fahrer die Wipptaste 18 nach oben oder unten verkippt, wird ein entsprechender Höhenpositionssteuerbefehl HB an die Rechnereinheit 16 weitergeleitet. Außerdem weist die Benutzerschnittstelle eine Multirichtungstaste 17 auf, welche in vier Richtungen gekippt werden kann. Diese Multirichtungstaste 17 kann beispielsweise in einen Multifunktionsgriff integriert sein, so dass der Fahrer mit dem Daumen die Multirichtungstaste 17 bedienen kann. Bei einem Wippen nach rechts oder links wird ein entsprechender Schwenkwinkelsteuerbefehl WB erzeugt, um den Auswurfkrümmer 2 nach rechts oder links um die vertikale Drehachse 3 zu verschwenken. Bei einem Wippen der Multirichtungstaste 17 nach oben oder unten wird ein entsprechender Auswurfklappensteuerbefehl KB erzeugt, mit dem die Auswurfklappe 9 hoch- bzw. heruntergestellt wird. Die Anordnung der Richtungen auf der Wipptaste 18 und der Multirichtungstaste 17 sind so gewählt, dass der Fahrer intuitiv in die richtige Richtung drückt.

Die ankommenden Steuerbefehle KB, WB, HB werden in der Rechnereinheit 16 zunächst intern bearbeitet. Die Rechnereinheit 16 gibt dann ein entsprechendes Stellsignal KS, WS, HS an eine Höhenpositionsstelleinrichtung 26, eine Schwenkwinkelstelleinrichtung 25 oder an eine Auswurfklappenstelleinrichtung 24 aus. Im vorliegenden Fall handelt es sich bei der Höhenpositionsstelleinrichtung 26 und der Auswurfklappenstelleinrichtung 24 um Ventile, welche jeweils Hydraulikzylinder 8, 10 ansteuern, mit denen der Auswurfkrümmer 2 um die horizontale Achse 4 bzw. die Auswurfklappe 9 bezüglich des Auswurfkrümmers 2 verkippt werden. In Figur 1 sind die beiden Hydraulikzylinder 8, 10 zur Verstellung der Höheneinstellung des Auswurfkrümmers 2 sowie zur Verstellung der abgabeseitig am Auswurfkrümmer 2 angeordneten Auswurfklappe 9 gut erkennbar. Bei der Schwenkwinkelstelleinrichtung 25 zur Verschwenkung des Auswurfkrümmers 2 um die vertikale Achse 3 handelt es sich üblicherweise um eine Hydraulikpumpe (nicht dargestellt), welche elektrohydraulisch eine Ölmenge auf einen Hydraulikmotor 32 gibt, der abtriebsseitig mittels eines Schneckenrads in einen Drehkranz 31 des Auswurfkrümmers 2 eingreift und diesen um die vertikale Achse 3 dreht. Anstelle des Hydraulikmotors 32 kann auch ein Schrittmotor oder dergl. verwendet werden, der direkt mit den passenden elektrischen Stellsignalen angesteuert wird.

Es ist klar, dass die von der Rechnereinheit 16 ausgehenden Stellsignale KS, WS, HS gegebenenfalls noch an die jeweiligen Stelleinrichtungen 24, 25, 26 angepasst, beispielsweise von einer digitalen in eine analoge Form umgewandelt werden müssen. Das gleiche gilt für alle von den Tasten und Schaltern der Benutzerschnittstelle kommenden Steuerbefehle, welche ebenfalls für die Rechnereinheit 16 von einer analogen in eine digitale Form umgewandelt werden müssen. Die hierfür benötigten Einrichtungen sind aber der Übersichtlichkeit halber nicht dargestellt. Sie können sowohl Teil der Rechnereinheit 16 als auch Teil der Benutzerschnittstelle bzw. der einzelnen Stelleinrichtungen 24, 25, 26 sein. Es kann sich auch um separate Einheiten handeln, die jeweils zwischen die Benutzerschnittstelle, die Rechnereinheit 16 und/oder die jeweiligen Stelleinrichtung 24, 25, 26 geschaltet werden.

Innerhalb der Rechnereinheit 16 ist die eigentliche Steuereinheit 29 in Form von Software implementiert. Sie ist in Figur 3 daher in Form eines Blocks gestrichelt innerhalb der Rechnereinheit 16 dargestellt. Diese Steuereinheit 29 der elektronischen Steuerung 30 steuert unter anderem auf Basis der vom Benutzer gegebenen Steuerbefehle KB, WB, HB die einzelnen Stelleinrichtungen 24, 25, 26 entsprechend an, d. h. sie setzt die Steuerbefehle KB, WB, HB in die Stellsignale KS, WS, HS für die Stelleinrichtungen 24, 25, 26 um.

Damit bei einer Verschwenkung die aktuellen Positionen des Auswurfkrümmers 2 und der Auswurfklappe 9 berücksichtigt werden können, befinden sich an geeigneten Stellen des Auswurfkrümmers 2 bzw. der Auswurfklappe 9 Positionsmesseinrichtungen 13, 14, 15, welche die jeweilige aktuelle Stellung registrieren und entsprechende Positionssignale an die Rechnereinheit 16 senden. Im einzelnen handelt es sich hier um ein Potentiometer 15 zur Bestimmung der Auswurfklappenstellung, ein Potentiometer 14 zur Bestimmung der Schwenkstellung des Auswurfkrümmers 2 um die horizontale Achse 4 und ein Potentiometer 13 zur Bestimmung des Schwenkwinkels um die vertikale Achse 3. Alternativ können die aktuellen Positionsdaten auch rein softwaremäßig, beispielsweise durch Mitprotokollieren der eingegebenen Steuerbefehle KB, WB, HB bzw. der ausgehenden Stellsignale KS, WS, HS gewonnen und zwischengespeichert werden.

Die vollautomatische Straßenfahrtpositionierung durch die Steuereinheit 29 erfolgt in der Weise, dass zunächst über die von den Positionsmesseinrichtungen 13, 14, 15 erhaltenen Positionssignale die aktuellen Positionen des Auswurfkrümmers 2 und der Auswurfklappe 9 bestimmt werden. Außerdem werden aus einem Speicher 23 die Positionsdaten der Straßenfahrtposition, d. h. der Position auf der Ablageeinrichtung 11, abgerufen. Es werden dann entsprechende Höhenpositionsstellsignale HS und Schwenkwinkelstellsignale WS an die Höhenpositionsstelleinrichtung 26 und die Schwenkwinkelstelleinrichtung 25 so ausgegeben, dass der Auswurfkrümmer 2 vorzugsweise auf dem schnellsten Weg direkt von der aktuellen Position A in die Straßenfahrtposition S verschwenkt wird. Hierbei wird in Abhängigkeit von der noch vorliegenden Distanz zur Straßenfahrtposition S, d. h. in Abhängigkeit von einer Annäherung an die einzelnen Zielpositionen bezüglich der Verschwenkung um die vertikale Achse 3 und um die horizontale Achse 4, die Geschwindigkeit gesteuert. Dabei wird zunächst der Auswurfkrümmer 2 relativ schnell um die vertikale Achse 3 geschwenkt, so dass er sich nahe einer Position oberhalb der Ablageeinrichtung 11 befindet. Dann erfolgt eine langsame Annäherung an die exakte Position. In der gleichen Weise wird der Auswurfkrümmer 2 zunächst relativ schnell um die horizontale Achse 4 nach unten geschwenkt, wobei die Geschwindigkeit umso mehr reduziert wird, je näher der Auswurfkrümmer 2 an die Ablageeinrichtung 11 gelangt, so dass der Auswurfkrümmer 2 schließlich sehr sanft auf der Ablageeinrichtung 11 abgesetzt wird.

An der Ablageeinrichtung 11 befindet sich obenseitig ein Endschalter 12, welcher beim Ablegen des Auswurfkrümmers 2 auf die Ablageeinrichtung 11 geschaltet wird. Dieser Endschalter 12 gibt ein Signal an die Rechnereinheit 16, wodurch die Steuereinheit 29 den Positioniervorgang abbricht. Der Endschalter 12 ist in erster Linie eine zusätzliche Sicherung, da die Steuereinheit 29 ohnehin über die Positionsmesseinrichtungen 13, 14, 15 jederzeit die aktuellen Positionsdaten des Auswurfkrümmers 2 kennt.

Zusätzlich zu der automatischen Verschwenkung des Auswurfkrümmers 2 selbst um die vertikale Achse 3 und um die horizontale Achse 4 wird auch durch Ausgeben eines entsprechenden Auswurfklappenstellsignals KS an die Auswurfklappenstelleinrichtung 24 dafür gesorgt, dass die Auswurfklappe 9 in die in Figur 1 dargestellte, gestreckte Ruhestellung gefahren wird.

Zur Auslösung des automatischen Straßenfahrtpositioniervorgangs weist die elektronische Steuerung 30 eine Auswerteeinrichtung 28 auf. Diese Auswerteeinrichtung 28 ist hier ebenfalls in Form von Software auf der Rechnereinheit 16 implementiert. Es kann sich dabei auch um eine Unterroutine innerhalb der Steuereinheit 29 handeln. Diese Auswerteeinrichtung 28 wertet verschiedene Steuerbefehle SB, TB, AB, GB oder Statussignale D der Maschine 1 aus, welche an die Rechnereinheit 16 geleitet werden.

Zu den Befehlen, die von der Auswerteeinrichtung 28 berücksichtigt werden, zählen ein Vorwärts-Freigabebefehl TB bei Einschalten eines Vorwärts-Freigabeschalters 20, ein Abschaltbefehl AB bei einem Abschalten des Hauptantriebs der Häckseltrommel mittels des Hauptantriebsschalters 21 und ein Gangeinstellungsbefehl GB beim Umschalten von einem ersten Gang, welcher für eine Erntefahrt gedacht ist, in einen zweiten, schnelleren Gang, welcher vornehmlich für eine Straßenfahrt gedacht ist, mittels eines Gangumschalters 22. Darüber hinaus wird ein Statussignal D eines Fahrtgeschwindigkeits- und/oder Fahrtstreckensensors 27 ausgewertet, welcher angibt, mit welcher Geschwindigkeit der Feldhäcksler 1 fährt. Anhand dieses Statussignals D kann von der Auswerteeinrichtung 28 die Fahrzeit berechnet werden, die vergangen ist, seitdem der Feldhäcksler 1 nach dem letzten Halt weitergefahren ist. Außerdem kann damit auch die bisher zurückgelegte Distanz berechnet werden.

Die vom Vorwärts-Freigabeschalter 20, vom Hauptantriebsschalter 21 sowie vom Gangumschalter 22 kommenden Steuerbefehle TB, AB, GB werden außerdem auch direkt an die betreffenden Aggregate weitergeleitet (nicht dargestellt), um die gewünschten Schaltvorgänge einzuleiten. Es ist aber auch möglich, dass die Steuerbefehle zunächst nur an die Rechnereinheit 16 weitergeleitet und dort ausgewertet werden und von der Rechnereinheit 16 dann entsprechende Signale an die betreffenden Aggregate ausgegeben werden.

Die Auswerteeinrichtung 28 ist derart programmiert, dass bei Eintritt bestimmter Ereignisse, welche durch die eingehenden Steuerbefehle TB, AB, GB oder Signale D bestimmbar sind, d. h. bei bestimmten Betriebszuständen und/oder Maschinenparametern bzw. Steuerbefehlen oder Kombinationen davon, der Straßenfahrtpositioniervorgang ausgelöst wird. Im vorliegenden Ausführungsbeispiel ist die Auswerteeinrichtung 28 so ausgebildet, dass der automatische Straßenpositioniervorgang dann ausgelöst wird, wenn entweder der Hauptantrieb der Häckseltrommel ausgestellt ist und die Erntemaschine 1 fährt, wobei bereits eine bestimmte Wegstrecke zurückgelegt wurde oder die Maschine eine bestimmte Zeitlang gefahren ist. Alternativ wird von der Auswerteeinheit 28 der automatische Positioniervorgang auch dann ausgelöst, wenn der Straßengang, d. h. der zweite Gang, eingelegt ist und außerdem der Vorwärts-Freigabeschalter 20 eingeschaltet ist.

Der erfindungsgemäße Automatismus ist jederzeit mittels der üblichen Bedientasten 17, 18 für den Auswurfkrümmer 2 und die Auswurfklappe 9 übersteuerbar oder sogar über eine spezielle Taste oder Tastenkombination abschaltbar.

Es wird noch einmal darauf hingewiesen, dass es sich bei der in den Figuren gezeigten Realisierung der Erfindung lediglich um ein Ausführungsbeispiel handelt, dass durch den Fachmann in vielen Einzelheiten variiert werden kann. So kann beispielsweise auf die Verwendung eines zusätzlichen Endschalters 12 verzichtet werden. Des Weiteren kann zum Beispiel auch anstelle eines speziellen Fahrtgeschwindigkeits- und/oder Fahrtstreckensensors 27 eine Kopplung an einen üblichen Tacho der Erntemaschine 1 erfolgen. Insbesondere kann es sich bei der Rechnereinheit 16 auch um einen Teil einer größeren Rechnereinrichtung handeln, welche zusätzliche weitere Funktionen und Betriebszustände der Erntemaschine 1 steuert.

### Bezugszeichenliste

- 1: Erntemaschine (Feldhäcksler)
- 2: Überladeeinrichtung (Auswurfkrümmer)
- 3: vertikale Achse
- 4: horizontale Achse
- 5: Fahrerkabine
- 6: Erntevorsatz
- 7: Einzug
- 8: Hydraulikzylinder
- 9: Auswurfklappe
- 10: Hydraulikzylinder
- 11: Ablageeinrichtung
- 12: Endschalter
- 13: Positionsmesseinrichtung
- 14: Positionsmesseinrichtung
- 15: Positionsmesseinrichtung
- 16: Rechnereinheit
- 17: Multirichtungstaste
- 18: Wipptaste
- 19: Straßenfahrtpositionsbefehltaste
- 20: Vorwärts-Freigabeschalter
- 21: Hauptantriebsschalter
- 22: Gangumschalter
- 23: Speicher
- 24: Auswurfklappenstelleinrichtung
- 25: Schwenkwinkelstelleinrichtung
- 26: Höhenpositionsstelleinrichtung
- 27: Fahrtgeschwindigkeits- und/oder Fahrtstreckensensor
- 28: Auswerteeinrichtung
- 29: Steuereinheit
- 30: elektronische Steuerung
- 31: Drehkranz
- 32: Hydraulikmotor
- A: Arbeitsstellung
- D: Statussignal
- S: Straßenfahrtposition
- AB: Abschaltbefehl
- GB: Gangeinstellungsbefehl
- KB: Auswurfklappensteuerbefehl
- HB: Höhenpositionssteuerbefehl
- SB: Straßenfahrtpositionsbefehl
- TB: Vorwärts-Freigabebefehl
- WB: Schwenkwinkelsteuerbefehl
- KS: Auswurfklappenstellsignal
- WS: Schwenkwinkelstellsignal
- HS: Höhenpositionsstellsignal

## Patentansprüche

1. Verfahren zur Steuerung einer um eine vertikale Achse (3) und eine horizontale Achse (4) schwenkbar an einem Feldhäcksler (1) angeordneten Überladeeinrichtung (2), bei dem die Überladeeinrichtung (2) automatisch aus einer aktuellen Position (A) um die vertikale Achse (3) in eine Position oberhalb einer an dem Feldhäcksler (1) angeordneten Ablageeinrichtung (11) für die Überladeeinrichtung (2) geschwenkt wird,
**dadurch gekennzeichnet,**
**dass** die Überladeinrichtung (2) innerhalb eines ereignisgesteuerten Straßenfahrtpositioniervorgangs automatisch in eine Straßenfahrtposition (S) auf die Ablageeinrichtung (11) abgesenkt wird, wobei der Straßenfahrtpositioniervorgang automatisch bei einem Umschalten des Feldhäckslers (1) in einen bestimmten Betriebszustand oder eine bestimmte Betriebszustandskombination und/oder bei einer Registrierung bestimmter Maschinenparameter oder Maschinenparameterkombinationen des Feldhäckslers (1 ) erfolgt.

2. Verfahren nach Anspruch 1, **dadurch gekennzeichnet, dass** der Straßenfahrtpositioniervorgang automatisch bei einem Einschalten eines Vorwärts-Freigabeschalters (20) des Feldhäckslers (1) ausgelöst wird.

3. Verfahren nach Anspruch 1 oder 2, **dadurch gekennzeichnet, dass** der Straßenfahrtpositioniervorgang automatisch bei einem Abschalten eines Hauptantriebs für eine Arbeitsvorrichtung des Feldhäckslers (1) ausgelöst wird.

4. Verfahren nach einem der Ansprüche 1 bis 3, **dadurch gekennzeichnet, dass** der Straßenfahrtpositioniervorgang erst ausgelöst wird, wenn ein Straßengang eingeschaltet ist.

5. Verfahren nach einem der Ansprüche 1 bis 4, **dadurch gekennzeichnet, dass** der Straßenfahrtpositioniervorgang erst ausgelöst wird, wenn der Feldhäcksler (1) eine bestimmte Zeitspanne gefahren ist und/oder eine bestimmte Wegstrecke zurückgelegt hat.

6. Verfahren nach einem der Ansprüche 1 bis 5, **dadurch gekennzeichnet, dass** die Überladeeinrichtung (2) innerhalb des Straßenfahrtpositioniervorgangs in einem ersten Schritt zunächst über die Ablageeinrichtung (11) geschwenkt wird und in einem nächsten Schritt dann auf die Ablageeinrichtung (11) abgesenkt wird.

7. Verfahren nach einem der Ansprüche 1 bis 5, **dadurch gekennzeichnet, dass** die Überladeeinrichtung (2) innerhalb des Straßenfahrtpositioniervorgangs durch gleichzeitiges koordiniertes Verschwenken um die vertikale Achse (3) und um die horizontale Achse (4) direkt aus einer Arbeitsposition (A) auf die Ablageeinrichtung (11) verfahren wird.

8. Verfahren nach einem der Ansprüche 1 bis 7, **dadurch gekennzeichnet, dass** die Schwenkgeschwindigkeit um die vertikale Achse (3) und/oder um die horizontale Achse (4) in Abhängigkeit von einem Abstand der aktuellen Position der Überladeeinrichtung (2) von einer Zielposition der jeweiligen Bewegung gesteuert wird.

9. Verfahren nach einem der Ansprüche 1 bis 8, **dadurch gekennzeichnet, dass** innerhalb des Straßenfahrtpositioniervorgangs eine abgabeseitig an der Überladeeinrichtung (2) angeordnete Auswurfklappe (9) in eine Ruheposition verfahren wird.

10. Vorrichtung zur Steuerung einer um eine vertikale Achse (3) und eine horizontale Achse (4) schwenkbar an einem Feldhäcksler (1) angeordneten Überladeeinrichtung (2),
mit Steuermitteln (30), um die Überladeeinrichtung (2) automatisch aus einer aktuellen Position (A) um die vertikale Achse (3) in eine Position oberhalb einer an dem Feldhäcksler (1) angeordneten Ablageeinrichtung (11) für die Überladeeinrichtung (2) zu verschwenken,
**dadurch gekennzeichnet,**
**dass** die Steuermittel (30) derart ausgebildet sind, dass die Überladeeinrichtung (2) innerhalb eines ereignisgesteuerten Straßenfahrtpositioniervorgangs automatisch in eine Straßenfahrtposition auf die Ablageeinrichtung (11) abgesenkt wird, wobei der Strassenfahrtpositioniervorgang automatisch bei einem Umschalten des Feldhäckslers (1) in einen bestimmten Betriebszustand oder eine bestimmte Betriebszustandskombination und/oder bei einer Registrierung bestimmter Maschinenparameter oder Maschinenparameterkombinationen des Feldhäckslers (1) erfolgt.

11. Vorrichtung nach Anspruch 10, **dadurch gekennzeichnet, dass** die Steuermittel (30)
- Positionsfeststellungsmittel (13, 14, 15) zur Ermittlung aktueller Positionsdaten der Überladeeinrichtung (2)
- und Mittel (29), um innerhalb des automatischen Straßenfahrtpositioniervorgangs in Abhängigkeit von der aktuellen Position der Überladeeinrichtung (2) und einer vorgegebene Ablageposition Steuersignale (WS) für eine Schwenkwinkelstelleinrichtung (25) zum Verschwenken der Überladeeinrichtung (2) um die vertikale Achse (3) sowie Steuersignale (HS) für eine Höhenpositionsstelleinrichtung (HS) zum Verschwenken der Überladeeinrichtung (2) um die horizontale Achse (4) zu generieren,
aufweisen.

12. Vorrichtung nach Anspruch 10 oder 11, **dadurch gekennzeichnet, dass** die Steuermittel (30) eine Auswerteeinheit (28) aufweisen, welche eingehende Steuerbefehle (TB, HB, GB) zur Steuerung des Feldhäckslers (1) und/oder Statussignale (D), die bestimmte Betriebszustände und/oder Maschinenparameter des Feldhäckslers (1) repräsentieren, auswertet und bei bestimmten Steuerbefehlen (TB, HB, GB) und/oder Statussignalen (D) oder Kombinationen von Steuerbefehlen (TB, HB, GB) und/oder Statussignalen (D) den Straßenfahrtpositioniervorgang auslöst.

13. Vorrichtung nach einem der Ansprüche 10 bis 12, **gekennzeichnet durch** einen Fahrtgeschwindigkeits- und/oder Fahrtstreckensensor (27).

14. Vorrichtung nach einem der Ansprüche 10 bis 13, **gekennzeichnet durch** einen an der Ablagevorrichtung (11) angeordneten Endschalter (12), welcher bei einem Ablegen der Überladeeinrichtung (2) in der Straßenfahrtposition auf der Ablageeinrichtung (11) betätigt wird und den Straßenfahrtpositioniervorgang beendet.

15. Feldhäcksler (1) mit einer daran um eine vertikale Achse (3) und eine horizontale Achse (4) schwenkbar angeordneten Überladeeinrichtung (2) und mit einer Vorrichtung zur Steuerung der Überladeeinrichtung (2) nach einem der Ansprüche 10 bis 14.

## Claims

1. A method of controlling a transloading device (2) which is arranged on a forage harvester (1) pivotably about a vertical axis (3) and a horizontal axis (4), in which the transloading device (2) is pivoted automatically from a current position (A) about the vertical axis (3) into a position above a support device (11) arranged on the forage harvester (1) for the transloading device (2),
**characterised in that**
the transloading device (2) is automatically lowered into an on-road travel position (S) on to the support device (11) within an event-controlled on-road travel positioning operation, wherein the on-road travel positioning operation is effected automatically when the forage harvester (1) is switched over into a given operating condition or a given operating condition combination and/or upon registration of given machine parameters or machine parameter combinations of the forage harvester (1).

2. A method according to claim 1 **characterised in that** the on-road travel positioning operation is triggered automatically when a forward enablement switch (20) of the forage harvester (1) is switched on.

3. A method according to claim 1 or claim 2 **characterised in that** the on-road travel positioning operation is triggered automatically when a main drive for a working apparatus of the forage harvester (1) is switched off.

4. A method according to one of claims 1 to 3 **characterised in that** the on-road travel positioning operation is triggered only when an on-road gear is engaged.

5. A method according to one of claims 1 to 4 **characterised in that** the on-road travel positioning operation is triggered only when the forage harvester (1) has travelled for a given period of time and/or has covered a given distance.

6. A method according to one of claims 1 to 5 **characterised in that** the transloading device (2) is pivoted within the on-road travel positioning operation in a first step firstly over the support device (11) and then in a next step is lowered on to the support device (11).

7. A method according to one of claims 1 to 5 **characterised in that** the transloading device (2) is moved directly from a working position (A) on to the support device (11) within the on-road travel positioning operation by simultaneous co-ordinated pivotal movement about the vertical axis (3) and about the horizontal axis (4).

8. A method according to one of claims 1 to 7 **characterised in that** the pivotal speed about the vertical axis (3) and/or about the horizontal axis (4) is controlled in dependence on a spacing of the current position of the transloading device (2) from a target position of the respective movement.

9. A method according to one of claims 1 to 8 **characterised in that** an ejection flap (9) arranged on the transloading device (2) at the discharge side is moved into a rest position within the on-road travel positioning operation.

10. Apparatus for controlling a transloading device (2) arranged on a forage harvester (1) pivotably about a vertical axis (3) and a horizontal axis (4),
comprising control means (30) for automatically pivoting the transloading device (2) from a current position (A) about the vertical axis (3) into a position above a support device (11) arranged on the forage harvester (1) for the transloading device (2),
**characterised in that**
the control means (30) are so designed that the transloading device (2) is automatically lowered into an on-road travel position on the support device (11) within an event-controlled on-road travel positioning operation, wherein the on-road travel positioning operation is effected automatically when the forage harvester (1) is switched over into a given operating condition or a given operating condition combination and/or upon registration of given machine parameters or machine parameter combinations of the forage harvester (1).

11. Apparatus according to claim 10 **characterised in that** the control means (30) comprise
- position detection means (13, 14, 15) for ascertaining current position data of the transloading device (2), and
- means (29) for generating within the automatic on-road travel positioning operation in dependence on the current position of the transloading device (2) and a predetermined support position control signals (WS) for a pivotal angle setting device (25) for pivoting the transloading device (2) about the vertical axis (3) and control signals (HS) for a heightwise position setting device (HS) for pivoting the transloading device (2) about the horizontal axis (4).

12. Apparatus according to claim 10 or claim 11 **characterised in that** the control means (30) have an evaluation unit (28) which evaluates incoming control commands (TB, HB, GB) for control of the forage harvester (1) and/or status signals (D) which represent given operating conditions and/or machine parameters of the forage harvester (1) and triggers the on-road travel positioning operation in relation to given control commands (TB, HB, GB) and/or status signals (D) or combinations of control commands (TB, HB, GB) and/or status signals (D).

13. Apparatus according to one of claims 10 to 12 **characterised by** a travel speed and/or travel distance sensor (27).

14. Apparatus according to one of claims 10 to 13 **characterised by** a limit switch (12) which is arranged at the support device (11) and which is actuated when the transloading device (2) is placed in the on-road travel position on the support device (11) and terminates the on-road travel positioning operation.

15. A forage harvester (1) comprising a transloading device (2) arranged pivotably about a vertical axis (3) and a horizontal axis (4) and an apparatus for control of the transloading device (2) according to one of claims 10 to 14.

## Revendications

1. Procédé de commande d'un dispositif de transfert (2) installé sur une ensileuse (1), avec possibilité de pivotement autour d'un axe vertical (3) et d'un axe horizontal (4), selon lequel le dispositif de transfert (2) est pivoté automatiquement autour de l'axe vertical (3) pour être amené d'une position actuelle (A) dans une position située au-dessus d'un dispositif de support (11), installé sur l'ensileuse (1), pour le dispositif de transfert (2),
**caractérisé en ce que**, dans le cadre d'un processus de positionnement de parcours sur route commandé par un événement, le dispositif de transfert (2) est abaissé automatiquement sur le dispositif de support (11), dans une position de parcours sur route (S), sachant que
le processus de positionnement de parcours sur route est exécuté automatiquement en cas de commutation de l'ensileuse (1) à un état de fonctionnement défini ou une combinaison définie d'états de fonctionnement et/ou en cas de détection de paramètres de machine définis ou de combinaisons définies de paramètres de l'ensileuse.

2. Procédé selon la revendication 1, **caractérisé en ce que** le processus de positionnement de parcours sur route est déclenché automatiquement lors de la fermeture d'un interrupteur d'autorisation de marche avant (20) de l'ensileuse (1).

3. Procédé selon la revendication 1 ou 2, **caractérisé en ce que** le processus de positionnement de parcours sur route est déclenché automatiquement en cas de coupure d'un dispositif d'entraînement principal d'un organe de travail de l'ensileuse (1).

4. Procédé selon une des revendications 1 à 3, **caractérisé en ce que** le processus de positionnement de parcours sur route n'est déclenché que si une vitesse de parcours sur route est enclenchée.

5. Procédé selon une des revendications 1 à 4, **caractérisé en ce que** le processus de positionnement de parcours sur route n'est déclenché que si l'ensileuse (1) s'est déplacée pendant un laps de temps défini et/ou a parcouru une distance définie.

6. Procédé selon une des revendications 1 à 5, **caractérisé en ce que**, pendant le processus de positionnement de parcours sur route, le dispositif de transfert (2) est d'abord amené par pivotement, au cours d'un premier pas, au-dessus du dispositif de support (11) et est abaissé sur le dispositif de support (11) au cours du pas suivant.

7. Procédé selon une des revendications 1 à 5, **caractérisé en ce que**, pendant le processus de positionnement de parcours sur route, le dispositif de transfert (2) est amené directement d'une position de travail (A) sur le dispositif de support (11), par pivotement coordonné simultané autour de l'axe vertical (3) et autour de l'axe horizontal (4).

8. Procédé selon une des revendications 1 à 7, **caractérisé en ce que** la vitesse de pivotement autour de l'axe vertical (3) et/ou autour de l'axe horizontal (4) est commandée en fonction d'une distance de la position actuelle du dispositif de transfert (2) par rapport à une position cible du mouvement concerné.

9. Procédé selon une des revendications 1 à 8, **caractérisé en ce que**, pendant le processus de positionnement de parcours sur route, un volet d'éjection (9), disposé côté décharge sur le dispositif de transfert (2), est amené dans une position de repos.

10. Système de commande d'un dispositif de transfert (2) installé sur une ensileuse (1), avec possibilité de pivotement autour d'un axe vertical (3) et d'un axe horizontal (4), comprenant des moyens de commande (30) pour faire pivoter le dispositif de transfert (2) automatiquement autour de l'axe vertical (3) et l'amener d'une position actuelle (A) dans une position située au-dessus d'un dispositif de support (11), installé sur l'ensileuse (1), pour le dispositif de transfert (2),
**caractérisé en ce que** les moyens de commande (30) sont agencés de manière à ce que le dispositif de transfert (2) soit abaissé automatiquement dans une position de parcours sur route, sur le dispositif de support (11), dans le cadre d'un processus de positionnement de parcours sur route commandé par un événement, sachant que
le processus de positionnement de parcours sur route est exécuté automatiquement en cas de commutation de l'ensileuse (1) à un état de fonctionnement défini ou une combinaison définie d'états de fonctionnement et/ou en cas de détection de paramètres de machine définis ou de combinaisons définies de paramètres de l'ensileuse.

11. Système selon la revendication 10, **caractérisé en ce que** les moyens de commande (30) présentent
- des moyens de détermination de position (13, 14, 15) pour déterminer des données de position actuelles du dispositif de transfert (2), et
- des moyens (29) pour générer, dans le cadre du processus automatique de positionnement de parcours sur route et en fonction de la position actuelle du dispositif de transfert (2) et d'une position de dépôt prédéterminée, des signaux de commande (WS) pour un dispositif de réglage d'angle de pivotement (25), en vue de faire pivoter le dispositif de transfert (2) autour de l'axe vertical (3), ainsi que des signaux de commande (HS) pour un dispositif de réglage de position en hauteur (HS) pour faire pivoter le dispositif de transfert (2) autour de l'axe horizontal (4).

12. Système selon la revendication 10 ou 11, **caractérisé en ce que** les moyens de commande (30) présentent une unité de traitement (28) qui analyse des instructions de commande (TB, HB, GB) entrantes, en vue de commander l'ensileuse (1), et/ou des signaux d'état (D), qui représentent des états de fonctionnement définis et/ou des paramètres définis de l'ensileuse (1), et déclenche le processus de positionnement de parcours sur route en présence d'instructions de commande (TB, HB, GB) définies et/ou de signaux d'état (D) définis ou de combinaisons définies d'instructions de commande (TB, HB, GB) et/ou de signaux d'état (D).

13. Système selon une des revendications 10 à 12, **caractérisé en ce qu'**il comprend un détecteur de vitesse de marche et/ou de trajet (27).

14. Système selon une des revendications 10 à 13, **caractérisé en ce qu'**il comprend un contacteur de fin de course (12) qui est installé sur le dispositif de support (11) et est actionné lors du dépôt du dispositif de transfert (2) sur le dispositif de support (11), dans la position de parcours sur route, et met fin au processus de positionnement de parcours sur route.

15. Ensileuse (1), comprenant un dispositif de transfert (2) installé sur ladite ensileuse, avec possibilité de pivotement autour d'un axe vertical (3) et d'un axe horizontal (4), et comprenant un système de commande du dispositif de transfert (2) selon une des revendications 10 à 14.
